Europäisches Patentamt

European Patent Office

Office européen des brevets

(19)

(11) Veröffentlichungsnummer: **0 149 087**
**A2**

(12) ## EUROPÄISCHE PATENTANMELDUNG

(21) Anmeldenummer: **84114602.0**

(22) Anmeldetag: **01.12.84**

(51) Int. Cl.⁴: **H 04 N 9/81**

(30) Priorität: **14.12.83 DE 3345142**

(43) Veröffentlichungstag der Anmeldung:
**24.07.85 Patentblatt 85/30**

(84) Benannte Vertragsstaaten:
**AT BE CH DE FR GB IT LI LU NL SE**

(71) Anmelder: **TELEFUNKEN Fernseh und Rundfunk GmbH**
**Göttinger Chaussee 76**
**D-3000 Hannover 91(DE)**

(72) Erfinder: **Scholz, Werner, Dipl.**
**Osterstrasse 20**
**D-3007 Gehrden(DE)**

(74) Vertreter: **Einsel, Robert, Dipl.-Ing.**
**TELEFUNKEN Fernseh und Rundfunk GmbH Göttinger**
**Chaussee 76**
**D-3000 Hannover 91(DE)**

(54) **Schaltung zur Zeitkompression oder Zeitexpansion eines Video-signals.**

(57) Bei einem Fernsehübertragungssystem mit Zeitkompression (Timeplex) werden das Leuchtdichtesignal und die Farbsignale in Speicher eingelesen und während einer kürzeren Zeit wieder ausgelesen. Erfindungsgemäß ist die Einleseimpulsfolge (f1L, f1C) mit der Zeilenfrequenz (FH) des ankommenden Signals verkoppelt, während die Frequenz der Ausleseimpulsfolge (f2L, f2C) konstant ist. Dadurch wird mit den ohnehin für die Zeitkompression benötigten Speichern zusätzlich ein Zeitfehlerausgleich für das ankommende Signal erreicht.

./...

Croydon Printing Company Ltd.

$$\text{Zahlenbeispiel:} \quad f_H = 15{,}625\,\text{kHz}$$

$$\text{Bitrate} = f_T = 52 \cdot f_H \quad \{ 1\,\text{PCM-Block}$$

$$f_{1L} = 20 \cdot f_T \quad = 2\text{H-Perioden}$$
$$= 104\,\text{bit} \quad \}$$

$$f_{1C} = 8 \cdot f_T$$

$$f_{2L} = f_{2C} = 24 \cdot f_T$$

Fig 1

- *1* -

H 01/49087

**Schaltung zur Zeitkompression oder Zeitexpansion eines Videosignals**

Für die Übertragung, insbesondere Aufzeichnung, eines Farbfernsehsignals ist es bekannt (DE-PS 20 56 684), das Leuchtdichtesignal und das Farbsignal zeitlich zu komprimieren, während einer Zeilendauer zeitlich nacheinander zu übertragen, bei der Wiedergabe zeitlich zu expandieren und wieder gleichzeitig verfügbar zu machen. Das Farbsignal nimmt dabei z.B. 20% und das Leuchtdichtesignal 80% der Zeilenhinlaufzeit ein. Da bei dieser Lösung niemals Leuchtdichtesignal und Farbsignal gleichzeitig, sondern zeitlich nacheinander aufgezeichnet sind, wird ein Übersprechen zwischen diesen Signalen vermieden. Außerdem kann der Aussteuerbereich der Übertragungsstrecke oder des Aufzeichnungsträgers für beide Signale voll ausgenutzt werden.

Bei einem unter dem Namen "Timeplex" bekannten Aufzeichnungsverfahren dieser Art (Fernseh- und Kino-Technik 1983, Nr.5, Seite 187-196, insbesondere Seite 193-194) werden abwechselnd in einer Zeile nach dem Zeilensynchronimpuls zunächst das zeitkomprimierte Farbdifferenzsignal (B-Y) und anschließend das zeitkomprimierte Leuchtdichtesignal Y und in der nächsten Zeile zunächst das zeitkomprimierte Farbdifferenzsignal (R-Y) und das zeitkomprimierte Leuchtdichtesignal Y übertragen. Die Zeitkompression und die Zeitexpansion erfolgen dabei mit getakteten Speichern, in die die Signale mit einer Einleseimpulsfolge eingelesen und entsprechend der Zeitkompression oder der Zeitexpansion mit einer Ausleseimpulsfolge anderer Frequenz, also mit einem anderen Takt, wieder ausgelesen werden.

Bei einem derartigen System ist es auch bekannt (AT-PS 313 999), die Frequenz der Einleseimpulsfolge und die Frequenz der Ausleseimpulsfolge jeweils mit der Zeilenfrequenz des Videosignals zu verkoppeln. Dabei werden aus den Zeilensynchronimpulsen mit PLL-Schaltungen die Impulsfolgen mit der notwendigen Frequenz abgeleitet.

Bei Systemen der beschriebenen Art ist es auch bekannt, zusätzlich ein PCM-Tonsignal zu übertragen und dabei das Taktsignal konstanter Frequenz für das PCM-Tonsignal mit der
Zeilenfrequenz des Timeplex-Signals fest zu verkoppeln.

In der Praxis kann das ankommende Signal, das durch Zeitkompression in ein Timeplex-Signal umgewandelt werden soll,
Zeitfehler aufweisen. Das ist z.B. der Fall, wenn das ankommende Signal von einem Videorecorder kommt. Wenn ein
derartiges Signal mit Zeitfehlern in ein Timeplex-Signal
umgewandelt wird, hat zwangsläufig auch das Timeplex-Signal
entsprechende Zeitfehler. Da die Taktfrequenz eines gleichzeitig übertragenen PCM-Tonsignals konstant ist, kann daher
die Forderung nach einer starren Verkopplung zwischen dem
Takt des PCM-Tonsignals und der Zeilenfrequenz des Timeplex-
Signals nicht mehr eingehalten werden.

Der Erfindung liegt die Aufgabe zugrunde, bei einem derartigen Fernsehübertragungssystem mit Zeitkompression die phasengenaue Verkopplung zwischen dem erzeugten Timeplex-Signal
und einem PCM-Tonsignal zu ermöglichen, auch wenn das ursprüngliche Videosignal Zeitfehler enthält.

Diese Aufgabe wird durch die im Anspruch 1 beschriebene Erfindung gelöst. Vorteilhafte Weiterbildungen der Erfindung
sind in den Unteransprüchen beschrieben.

Bei der erfindungsgemäßen Lösung werden die für die Zeitkompression ohnehin benötigten Speicher in vorteilhafter Weise
gleichzeitig zur Beseitigung der Zeitfehler ausgenutzt. Bei
bekannten Codierschaltungen für das Timeplex-Signal wurden
die Einleseimpulsfolge und die Ausleseimpulsfolge von einem
gemeinsamen Generator hoher Frequenz abgeleitet, so daß Einleseimpulsfolge und Ausleseimpulsfolge fest verkoppelt sind
und somit im ankommenden Signal vorhandene Zeitfehler im
Timeplex-Signal bestehenbleiben. Bei der erfindungsgemäßen
Lösung indessen wird die Einleseimpulsfolge aus dem ankommenden Signal abgeleitet, so daß das ankommende Signal mit seinen
Zeitfehlern zunächst in die Speicher eingelesen wird. Die Ausleseimpulsfolge ist indessen weitestgehend konstant und ist
lediglich dem Mittelwert der Zeilenfrequenz des ankommenden
Signals angepaßt. Da jetzt der Auslesevorgang mit einer Aus-

leseimpulsfolge konstanter Frequenz erfolgt, enthält das aus den Speichern ausgelesene Signal keine Zeitfehler mehr. Der Schaltungsaufwand ist nur gering, weil die Speicher und der Taktgenerator für die Ausleseimpulsfolge konstanter Frequenz im allgemeinen ohnehin vorhanden sind, z.B. als Taktgenerator für einen PCM-Coder für die Tonsignale.

Die Erfindung ist besonders vorteilhaft anwendbar, wenn einerseits das Timeplex-Signal und andererseits ein PCM-Tonsignal übertragen oder aufgezeichnet werden soll. Dann kann mit der erfindungsgemäßen Schaltung die gewünschte starre Verkopplung zwischen dem Takt des PCM-Tonsignals und der Zeilenfrequenz des Timeplex-Signals erreicht werden.

Es ist zwar bekannt (DE-OS 21 29 760), zum Ausgleich von Zeitfehlern eines Videosignals das Signal während der Ist-Zeilenperiode in den Speicher einzulesen und ohne Zeitfehler von Beginn der Soll-Zeilenperiode wieder aus den Speicher auszulesen. Bei dieser Lösung handelt es sich aber nicht darum, Zeitfehler in einem Timeplex-Signal auszugleichen. Deshalb erfolgt dort auch nicht die vorteilhafte doppelte Ausnutzung eines Speichers für eine Zeitkompression und einen Zeitfehlerausgleich.

Es ist auch bekannt (DE-PS 2 348 291), jeweils von Zeile zu Zeile abwechselnd einmal das Leuchtdichtesignal und zum anderen zeitlich nacheinander mehrere zeitkomprimierte Farbsignale aufzuzeichnen. Dabei ist es auch bekannt, in den Zeilen mit der Aufzeichnung der Farbsignale zusätzlich ein weiteres Signal, z.B. ein Tonsignal aufzuzeichnen. Dort tritt jedoch die der Erfindung zugrunde liegende Aufgabe nicht auf. Einerseits handelt es sich nicht um ein PCM-Tonsignal. Andererseits erfolgt dort die Aufzeichnung der Bildsignale und des Tonsignals zeitsequentiell und nicht gleichzeitig. Aus beiden Gründen ist daher eine Takt-Verkopplung zwischen dem Bildsignal und dem Tonsignal nicht möglich.

Es ist auch ein Timeplex-System bekannt (DE-OS 26 29 706), bei dem der Takt für das Einlesen oder Auslesen als auch die zeitliche Lage von Einleseimpulsfolge bzw. Ausleseimpulsfolge in ihrer Phasenlage an die zeilenfrequenten Impulse angepaßt werden. Dadurch wird erreicht, daß auch bei Zeitfehlern, die zu Schwankungen der Zeilendauer führen, die Farbdeckung zwischen den Farbsignalen und dem Leuchtdichtesignal erhalten bleibt. Die Aufgabe, derartige Zeitfehler im Videosignal zu beseitigen, wird dort nicht behandelt. Auch die bei der Erfindung wesentliche doppelte Ausnutzung von Speichern einerseits für die Zeitkompression oder Zeitexpansion und andererseits für die Beseitigung von Zeitfehlern, wird dort nicht durchgeführt.

Die Erfindung wird im folgenden anhand der Zeichnung näher erläutert. Darin zeigen:

Fig. 1 ein Blockschaltbild der erfindungsgemäßen Schaltung mit Zeitkompression,

Fig. 2 eine Schaltung mit drei Speichern für die Zeitkompression des Leuchtdichtesignals,

Fig. 3 ein Schaltungsbeispiel für eine PLL-Schaltung in Fig. 1,

Fig. 4 Kurven zur Erläuterung der Wirkungsweise der Schaltung nach Fig. 3 und

Fig. 5 zwei verriegelte Ringzählerschaltung zur Erzeugung der Schaltspannungen in der Schaltung nach Fig. 2.

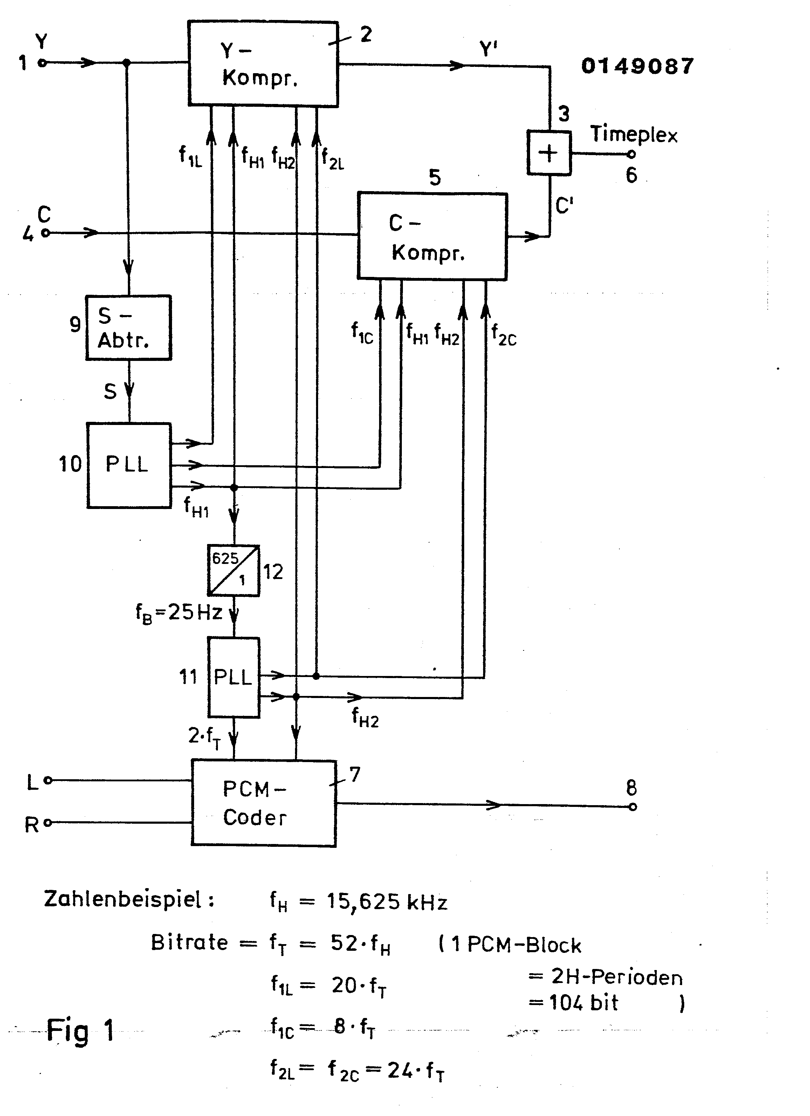

In Fig. 1 gelangt das Leuchtdichtesignal Y von der Klemme 1 auf
die Kompressionsschaltung 2, die das Leuchtdichtesignal um den
Kompressionsfaktor 0,833 zeitlich komprimiert. Das derart komprimierte Leuchtdichtesignal Y' gelangt auf die Addierstufe 3.
Das Farbsignal C, das zeilenweise nacheinander das Farbdifferenzsignal (B-Y) und das Farbdifferenzsignal (R-Y) enthält, gelangt
von der Klemme 4 auf die Kompressionsschaltung 5, die eine Zeitkompression um den Faktor 0,333 bewirkt. Das zeitkomprimierte
Farbsignal C' gelangt ebenfalls auf die Addierstufe 3. An der
Ausgangsklemme 6 entsteht dann ein Timeplex-Signal, wie es in
der Beschreibungseinleitung erläutert ist.

Die in Fig. 1 verwendeten Symbole haben folgende Bedeutung.

$f1L$  Einlesetakt für das Leuchtdichtesignal Y

$fH1$  Zeilenfrequentes Signal zum Starten der Einlesevorgänge
      für Y

$fH2$  Zeilenfrequentes Signal zum Starten der Auslesevorgänge
      für Y

$f2L$  Auslesetakt für Y

$f1C$  Einlesetakt für die Farbsignale C

$fH1$  Zeilenfrequentes Signal zum Starten der Einlesevorgänge
      für C

$fH2$  Zeilenfrequentes Signal zum Starten der Auslesevorgänge
      für C

$f2C$  Auslesetakt für C

$fT$   Bitrate für den PCM-Coder.

Der PCM-Coder 7 wird mit den beiden NF-Tonsignalen L und R, also
einem Stereo-Tonsignal, gespeist und erzeugt an der Klemme 8 ein
PCM-Tonsignal, das zusammen mit dem Timeplex-Signal an der Klemme
6 aufgezeichnet wird. Das PCM-Tonsignal an der Klemme 8 hat eine
Blocklänge von 104 bit, wobei 1 PCM-Block gleich der Dauer von
zwei Zeilen des Timeplex-Signals ist. Die bit-Rate des PCM-Signals ist $fT = 52 \cdot fH$, wobei fH die Zeilenfrequenz des Timeplex-
Signals ist. Die Frequenzen der für die Kompressionsschaltungen
2,5 erforderlichen Taktspannungen sind ganzzahlige Vielfache der
bit-Rate fT. Die genannten Kompressionsfaktoren sind sowohl für die 525- als auch für die 625-Zeilennorm geeignet. Die Schaltung gilt für beide Zeilenzahlen. Lediglich der Teiler zur Erzeugung der Bildfrequqnz von $f_B$ = 25 bzw. 30 Hz aus der Zeilenfrequenz $f_H$ wird auf 625 oder 525 eingestellt.

Mit der Synchronsignalabtrennstufe 9 wird das Synchronsignal S aus dem Leuchtdichtesignal Y abgetrennt und der PLL-Schaltung 10 zugeführt. Diese Schaltung erzeugt die angegebenen Impulsfolgen für die Einlesevorgänge in den Schaltungen 2 und 5. Die Zeitkonstante ist so bemessen, daß die Einleseimpulsfolgen den Zeitfehlern im Signal Y und C folgen. Der Oszillator innerhalb der PLL-Schaltung 10 schwingt mit einer Frequenz von $f_{1L}$ = 1040·$f_H$. Aus dieser Schwingung wird mit Zählschaltungen das zeilenfrequente Signal $f_{H1}$ gewonnen. Dieses Signal hat nicht nur zu Einlesetakten $f_{1L}$ und $f_{1C}$ eine definierte Phase, sondern auch zum Signal S. Es ist aber im Gegensatz zum Signal S frei von Impulsstörungen. $f_{H1}$ liefert die Bezugsphase für das Starten der Einlesevorgänge in den beiden Kompressionsschaltungen 2 und 5. Die zweite PLL-Schaltung 11 wird über den Frequenzteiler 12 mit einem bildfrequenten Signal gespeist und hat eine so große Zeitkonstante, daß die erzeugten Impulsfolgen nicht den Zeitfehlern folgen, sondern lediglich dem Mittelwert der Frequenz der Einleseimpulsfolge. Das ist wichtig, da sonst z.B. bei einer konstanten geringen Abweichung der Zeilenfrequenz von dem Normalwert die zur Zeitkompression dienenden Speicher überlaufen würden. Die PLL-Schaltung 11 liefert außerdem die Taktfrequenz 2·$f_T$ für den PCM-Coder 7. Der Block- und bit-Takt des PCM-Signals ist in definierter Weise mit den Auslesetakten für die komprimierten Videosignale Y' und C' verkoppelt. Daher kann das zusammen mit dem Timeplex-Signal an der Klemme 6 übertragene PCM-Tonsignal an der Klemme 8 zur Erzeugung der für die Timeplex-Decodierung erforderleichen Impulsspannungen verwendet werden. Eine derartige Schaltung ist näher beschrieben in der älteren Patentanmeldung P 33 10 890.0.

Die Auslesezähler für die Kompressionsschaltung 2,5 erhalten die gleiche Taktfrequenz $f_2$. Sie werden jedoch nacheinander gestartet, so daß die komprimierten Signale Y' und C' sequentiell an der Ausgangsklemme 6 erscheinen. Wenn das Farbsignal
C jeweils vor dem zugehörigen Leuchtdichtesignal Y übertragen
oder aufgezeichnet werden soll, wird der Auslesezähler in der
Kompressionsschaltung 2 jeweils durch Beendigung des Auslesevorganges in der Kompresssionschaltung 5 gestartet. Die dadurch
entstehende Sequenz von Farbsignal C und Leuchtdichtesignal Y
hat eine definierte Phase zum PCM-Block- und Bittakt.

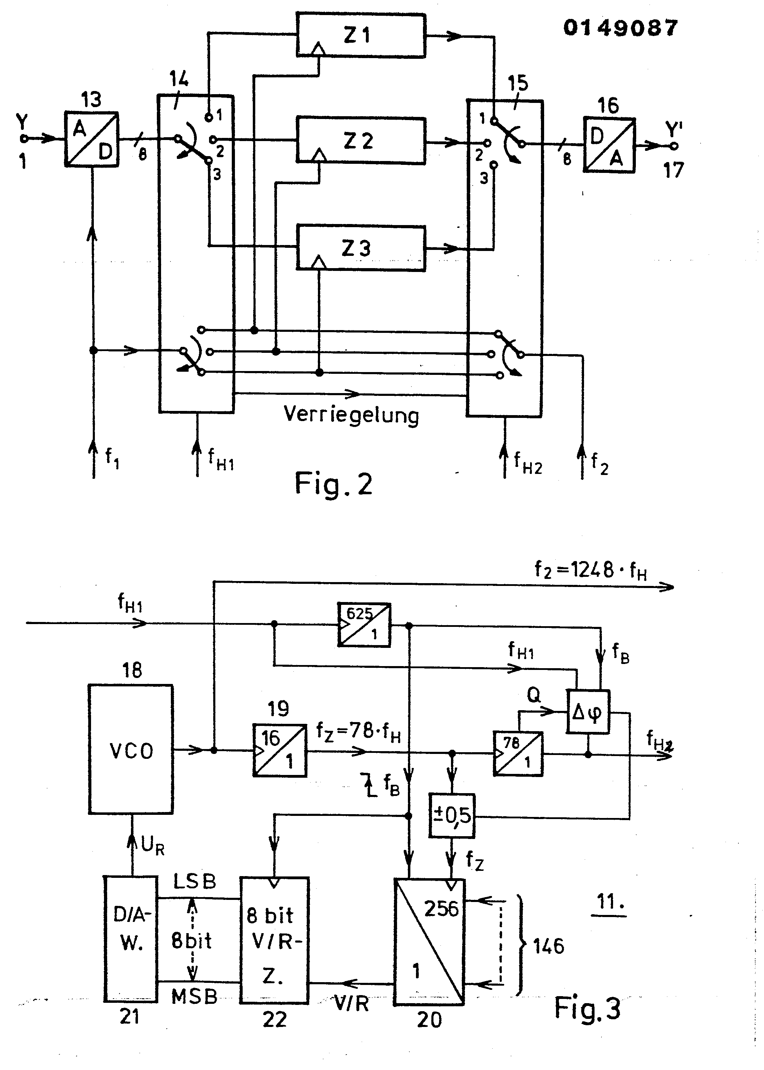

Fig. 2 zeigt schematisch den Aufbau der Kompressionsschaltungen
2,5. Die Wirkungsweise wird für das Leuchtdichtesignal Y beschrieben. Da die Speicherung der Signale in den Kompressionsschaltungen 2,5 digital erfolgt, gelangt das Leuchtdichtesignal Y von der Klemme 1 zunächst auf den A/D-Wandler 13 und von
dort über den zeilenfrequent betätigten Umschalter 14 auf drei
Zeilenspeicher Z1,Z2,Z3. Das digitalisierte Leuchtdichtesignal
Y wird von Zeile zu Zeile wechselnd in die Speicher Z1,Z2,Z3
eingelesen und mit dem ebenfalls zeilenfrequent betätigten Umschalter 15 um ca. 1,5 Zeilen verzögert wieder ausgelesen und
mit dem D/A-Wandler 16 wieder in das analoge, zeitkomprimierte
Leuchtdichtesignal Y' an der Klemme 17 umgewandelt. Die Speicher
Z1,Z2,Z3 sind Schieberegister für 8 bit parallel oder entsprechende RAM's einschließlich je einer Zählschaltung für die
Addressierung. Wenn die Taktspannungen für das Einlesen und
Auslesen aus einer gemeinsamen Frequenz erzeugt werden,genügen
im allgemeinen zwei Zeilenspeicher Z für jede Kompressionschaltung 2,5, wobei jeweils in einen Speicher das Signal einer Zeile
eingelesen und das Signal der vorhergehenden Zeile aus dem anderen Speicher ausgelesen wird. Für den beschriebenen Zeitfehlerausgleich sind die Taktspannungen für das Einlesen und Auslesen gemäß Fig. 1 verschiedenen Taktgeneratoren entnommen.
Die Einlese- und Auslesezeiten werden dabei so eingehalten, daß
keine Überschneidungen entstehen, d.h. daß bei einem Zeilenspeicher niemals gleichzeitig ein- und ausgelesen wird.

Wegen der Austastzeiten und der durch die Zeitkompression signalfreien Zeiten könnte bereits bei einer Schaltung mit nur zwei Zeilenspeichern eine Zeitkorrektur durchgeführt werden. Der
Zeitfehler dürfte jedoch nur klein sein, und der zulässige
Zeitschwankungsbereich müßte genau eingehalten werden. Durch
die Verwendung des dritten Zeilenspeichers Z3 wird ein größerer
Spielraum für den Zeitfehlerausgleich geschaffen, so daß auch
Signale mit größeren Zeitfehlern, z.B. von einem Videorecorder
oder einem Bildplattenspieler, ohne Schwierigkeiten von Zeitfehlern befreit werden können. Es können auch noch weitere
zusätzliche Zeilenspeicher vorgesehen werden. Die Umschalter 14,
15 werden paarweise von zwei Ringzählern eingestellt. Eine Verriegelung zwischen den Ringzählern sorgt dafür, daß keiner der
Zeilenspeicher gleichzeitig den Einlese- und Auslesetakt erhalten kann. Für eine günstige mittlere Phaseneinstellung zwischen den beiden Ringzählern sorgt die in Fig. 3 dargestellte
Schaltung für die Realisierung der PLL-Schaltung 11. Aus Fig. 5
geht hervor, wie durch das Zusammenwirken von Verriegelung der
Ringzähler und Phasenregelung durch die PLL (fH1 und fH2 auf
Lücke) die günstige Phaseneinstellung für das Auffangen von
Zeitschwankungen erreicht wird.

Es ist ersichtlich, daß die Schaltung gemäß Fig. 2 zwischen dem
Eingangssignal und dem Ausgangssignal eine Verzögerung mit der
Dauer von 1 oder 2 Zeilen bewirken kann. Dadurch kann zusätzlich
ein vertikaler Laufzeitausgleich bei der Wiedergabe mit Verwendung der Schaltung Fig. 2 als Expansionsschaltung erreicht
werden. Das hat folgenden Zweck: Bei der Demodulation eines
PAL- oder Secam-Signals zwecks Timeplex-Aufzeichnung in einem
Videorecorder erleidet das Farbsignal eine Verzögerung um die
Dauer einer halben Zeile. In einem PAL- oder Secam-Decoder eines
Farbfernsehempfängers wird bei der Wiedergabe ebenfalls das
Farbsignal um die Dauer einer halben Zeile verzögert, so daß
insgesamt eine Verzögerung des Farbsignals um die Dauer einer
Zeile entsteht. Wenn jetzt in der Timeplex-Wiedergabe-Schaltung
das Farbsignal mit einer Schaltung gemäß Fig. 2, bei der Expansion um die Dauer einer Zeile verzögert wird, weil ständig jeweils in einen Speicher eingelesen und gleichzeitig das Signal
der vorangehenden Zeile aus dem jeweils vorhergehenden Speicher ausgelesen wird, und wenn das Leuchtdichtesignal bei der Expansion so aus der Schaltung Fig. 2 ausgelesen wird, daß es eine Verzögerung um die Dauer von zwei Zeilen erhält, dann ist insgesamt in vorteilhafter Weise das Leuchtdichtesignal gegenüber dem Farbsignal um eine Zeilendauer verzögert. Dadurch wird die genannte Verzögerung um eine Zeilendauer im Farbsignal ausgeglichen.

Dies wird anhand der folgenden Tabelle erläutert. Die Zahlen bedeuten die drei zeilensequentiell wirksamen Speicher und somit zugleich zeitlich aufeinanderfolgende Zeilen

| Ringzähler für Einlesen | für Auslesen | |
|---|---|---|
| Y = C | C | Y |
| 1 | 3 | 2 |
| 2 | 1 | 3 |
| 3* | 2 | 1 |
| 1 | 3* | 2 |
| 2 | 1 | 3* |
| 3 | 2 | 1 |
| 1 | 3 | 2 |

Beim Einlesevorgang werden Leuchtdichtesignal Y und Farbsignal C simultan eingelesen. Beim Auslesevorgang ist das Leuchtdichtesignal um zwei Zeilen verzögert, das Farbsignal C nur um eine Zeile. Das in den mit einem Stern bezeichneten Speicher Nr. 3 eingelesene Farbsignal C wird also um eine Zeile später aus dem Speicher Nr. 3 ausgelesen, das Leuchtdichtesignal Y jedoch zwei Zeilen später. Dadurch entsteht in dem Timeplex-Signal die gewünschte Verzögerung von einer Zeile zwischen dem Leuchtdichtesignal Y und dem Farbsignal C.

Fig. 3 zeigt ein Ausführungsbeispiel für die PLL- Schaltung 11 in Fig. 1. Der von dieser Schaltung gelieferte Takt soll in hohem Maße frequenzkonstant sein. Außerdem soll die Phase der Auslesesequenzen für die Kompressionsschaltungen so geregelt werden, daß an den einzelnen Zeilenspeichern keine Überschneidung mit den Einlesevorgängen entsteht.

Der VCO-Oszillator 18, der Bestandteil der PLL-Schaltung 11 in
Fig. 1 ist, hat eine hohe Frequenzstabilität. Wenn gewährleistet
ist, daß die mittlere Zeilenfrequenz des ankommenden Signals
an den Klemmen 1,4 mit ausreichender Genauigkeit der Norm entspricht, kann für den Oszillator 18 evtl. ein Quarz-Oszillator
verwendet werden.

Die Regelung der in Fig. 3 dargestellten PLL-Schaltung erfolgt
mit einer Impulsspannung, deren Frequenz (fB = 25 Hz) der Periode der Zeitschwankung entspricht. Diese hat z.B. bei Videorecordern mit zwei Köpfen die Dauer von 2 Teilbildern. Im allgemeinen sind die Impulse der Frequenz fB äquidistant.Dieses
ist näher beschrieben ist der DE-OS 27 45 375. Zur Vermeidung
von Impulsstörungen wird das fB-Signal nicht direkt aus dem
Signal S, sondern aus den mit Hilfe der PLL-Schaltung 10 regenerierten Impulsen fH1 erzeugt (Fig. 1).

Die in Fig. 3 dargestellte digitale PLL-Schaltung 11 arbeitet
folgendermaßen. Mit dem Zähler 20 wird festgestellt, ob die
Periodenzahl des Oszillators 18 je Periode von fB zu groß oder
zu klein ist. Je nach Richtung der Abweichung zählt ein Vor/
Rück-Zähler 22 einen Schritt vorwärts oder rückwärts. Der Zählerstand des Vor/Rück-Zählers 22 wird mit Hilfe des D/A-Wandlers
21 in die Spannung UR umgewandelt, die zur Regelung des Oszillators 18 dient. Die jeweilige Änderung von UR wirkt der ermittelten Frequenzabweichung entgegen. Die Regelverstärkung wird vorzugsweise so eingestellt, daß im eingeschwungenen Zustand ein
Pendeln der Regelschaltung über nicht mehr als drei D/A-Wandler-
Stufen auftritt. Das entspricht bei dem hier angegebenen Zahlenbeispiel einer Gleichlaufschwankung von $\pm 2 \cdot 10^{-5}$.

Durch Verwendung eines D/A-Wandlers mit mehr oder weniger
Quantisierungsstufen sowie entsprechender Zählschaltungen kann
die PLL-Schaltung den jeweiligen Anforderungen angepaßt werden.

Die Frequenz des Oszillators 18 wird mit dem Frequenzteiler 19 durch 16 geteilt, um die eigentliche Zählfrequenz fZ zu bilden. Das Verhältnis zwischen Zählfrequenz und Vergleichsfrequenz fB bestimmt die verbleibende Gleichlaufschwankung. Der Zähler 20 zur Ermittlung der Periodenzahlabweichung braucht nicht für die volle Zahl der auf eine Periode von fB fallenden Perioden fZ ausgelegt zu sein (625·78 = 48.750). Im Beispiel nach Fig. 3 wird ein 8-bit-Zähler 22 verwendet. Dieser Zähler 22 zählt während einer Periode von fB 190 mal bis 256 und einmal von 146 bis 256. Das ergibt 48.750 Zählschritte. Mit der Zahl 146 wird der Zähler 22 bei jeder synchronisierenden Flanke von fB geladen. Dann zählt er weiter bis zur nächsten Flanke von fB. Die Frequenzstabilität des Oszillators 18 muß so gut sein, daß die Anzahl der Zählerdurchläufe je Periode von fB (190) nicht verändert werden kann. Das MSB des Zählers 20 kann nun verwendet werden, um die Zählrichtung des Vor/Rück-Zählers 22 zu steuern. Je nachdem, ob das MSB des Zählers 20 bei der synchronisierenden Flanke von fB noch auf null oder schon auf eins ist, zählt der Vor/Rück-Zähler einen Schritt vorwärts oder rückwärts.

Die Pegelübergänge der Spannung fB fallen mit den Bezugsflanken der Impulse fH1 zusammen. Wegen des Aufbaus der Kompressionsschaltungen 2,5 mit einer ungeraden Zahl von Zeilenspeichern ist es vorteilhaft, daß der Auslesevorgang jeweils in der Mitte des Einlesevorganges für eine Zeile beginnt.

Wenn außerdem durch die Verriegelung zwischen den Ringzählern in den Kompressionsschaltungen 2,5 dafür gesorgt wird, daß niemals ein Zeilenspeicher gleichzeitig den Ein- und Auslesetakt erhält, ist ein störungsfreier Betrieb dieser Schaltungen sichergestellt. Diese Zusammenhänge werden durch Fig. 5 veranschaulicht.

Der eingeschwungene Zustand der in Fig. 3 dargestellten Schaltung ist erreicht, wenn Ausgangswert des Vor/Rück-Zählers 22 nur noch um ± eine Einheit schwankt. Nun wird die mit Hilfe des Teilers-durch-78 erzeugte Spannung fHz mit fH1 Phasenverglichen. Dazu wird ein mit fH2 phasenverkoppeltes Hilfssignal

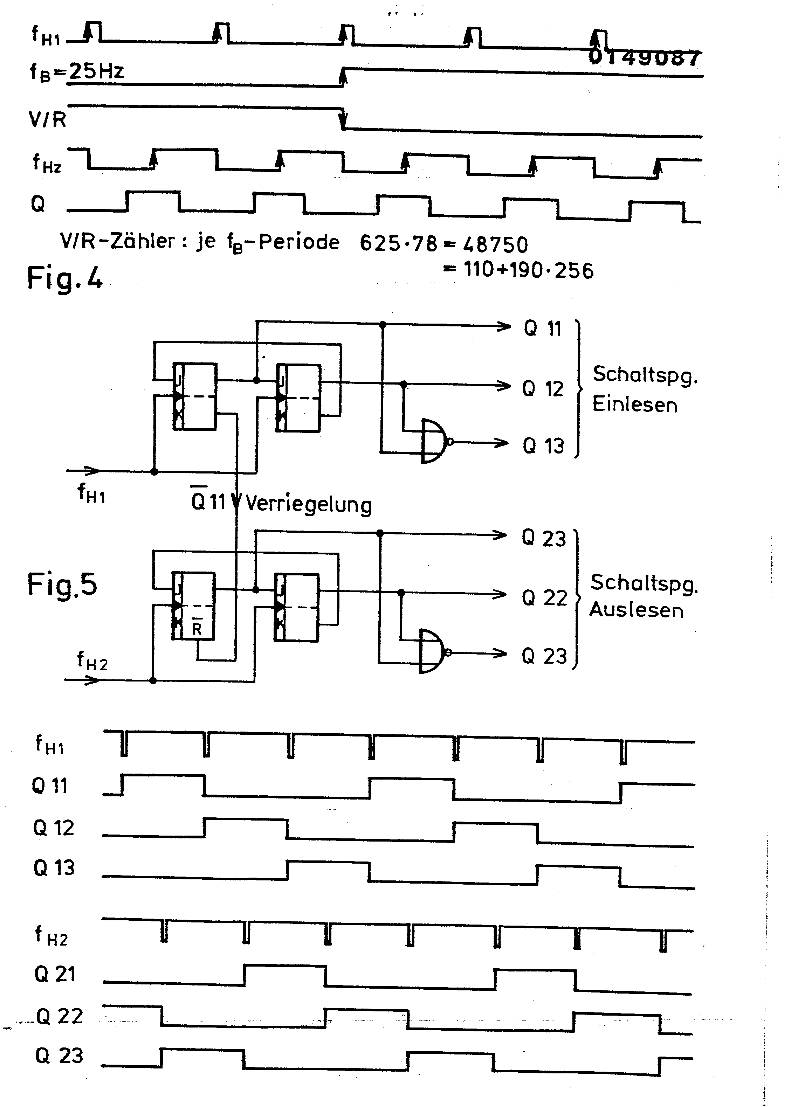

Q benutzt.(Fig. 4). Fallen während einer Periode von fB die synchronisierenden Flanken von fH1 auf Q = 0, so ist keine Phasenkorrektur erforderlich. Ist dies nicht der Fall, wird in der Taktzuführung für den Zähler 20 jeweils pro Periode von fB eine Halbwelle zugefügt oder unterdrückt, je nachdem ob die Flanken von fH1 auf den Wert null oder eins von fH2 fallen. Diese Art der Phasenbeeinflussung ist in der älteren Patentanmeldung P 33 31 714.3 beschrieben. Der Signalverlauf von Q entspricht der zulässigen Phasenschwankung zwischen fH1 und fH2. Bei einer periodischen Zeitschwankung von fH1 mit der Periode von fB braucht die Phase zwischen der Spannung fB und der Zeitschwankung im Gegensatz zu der in der DE-OS 27 45 375 beschriebenen Schaltung nicht berücksichtigt zu werden. Die Phasenbeeinflussung von fH2, bei der das Frequenzteilerverhältnis zwischen f2 und fH2 unverändert bleibt, sorgt stets dafür, daß an den Zeilenspeichern von Fig. 2 keine Überschneidungen zwischen Einlese- und Auslesevorgang auftreten können.

T E L E F U N K E N
Fernseh und Rundfunk G m b H
Göttinger Chaussee 76
D-3000 Hannover 91

Hannover, den 30.10.1984
E/PTL-Wp/gn

P a t e n t a n s p r ü c h e

1. Schaltung zur Zeitkompression oder Zeitexpansion eines
   Videosignals, bei dem das Leuchtdichtesignal und die
   Farbsignale mit einer Einleseimpulsfolge in einen Speicher
   (2,5) eingelesen und während einer veränderten Zeit mit
   einer Ausleseimpulsfolge mit gegenüber der Einleseimpulsfolge veränderter Frequenz aus dem Speicher (2,5) ausgelesen werden, und die Einleseimpulsfolge und die Ausleseimpulsfolge aus den Zeilensynchronimpulsen des Videosignals abgeleitet und mit der Zeilenfrequenz verkoppelt sind,
   gekennzeichnet durch folgende Merkmale:
   a) die Zeitkonstante, mit der die Frequenz der Einleseimpulsfolge (f1L, f1C) den Änderungen der Zeilenfrequenz
      (fH) folgt, ist so gering bemessen, daß die Frequenz
      der Einleseimpulsfolge (f1L, f1C) den Zeitfehlern der
      Zeilenfrequenz folgt,
   b) die Zeitkonstante, mit der die Frequenz der Ausleseimpulsfolge (f2L, f2C) den Änderungen der Zeilenfrequenz
      (fH) folgt, ist so groß bemessen, daß die Frequenz der
      Ausleseimpulsfolge (f2L, f2C) den Zeitfehlern der Zeilenfrequenz (fH) nicht folgt und dem zeitlichen Mittelwert der Zeilenfrequenz entspricht.

2. Schaltung nach Anspruch 1, dadurch gekennzeichnet, daß
   die Einleseimpulsfolge (f1L, f1C) mit einer ersten PLL-
   Schaltung (10) entsprechend niedriger Zeitkonstante und
   die Ausleseimpulsfolge (f2L, f2C) mit einer zweiten PLL-
   Schaltung (11) entsprechend hoher Zeitkonstante aus dem Synchronsignal (S) des ankommenden Signals (Y) gewonnen ist.

3. Schaltung nach Anspruch 2, <u>dadurch gekennzeichnet</u>, daß die Ausgangsspannung der zweiten PLL-Schaltung (11) sowohl als Ausleseimpulsfolge (f2L, f2C) als auch als Taktimpulsfolge (2fT) für einen PCM-Coder (7) für ein gleichzeitig übertragenes Tonsignal (L,R) dient.

4. Schaltung nach Anspruch 1, <u>dadurch gekennzeichnet</u>, daß für die Zeitkompression jeder Signalkomponente (Y,C) drei Speicher (Z1,Z2,Z3) für je eine Zeilendauer vorgesehen sind, in die das betreffende Signal zeilenweise nacheinander eingelesen und jeweils ca. 1,5 Zeilen später wieder ausgelesen wird (Fig. 2,5).

5. Schaltung nach Anspruch 1, <u>dadurch gekennzeichnet</u>, daß auf der Wiedergabeseite für die Zeitexpansion des Leuchtdichtesignals (Y) drei oder mehr jeweils zeilenweise nacheinander eingelesene und ausgelesene Speicher vorgesehen sind und der Auslesevorgang so gesteuert ist, daß das Leuchtdichtesignal (Y) gegenüber dem Farbsignal und die Dauer von n Zeilen verzögert ist.

6. Schaltung nach Anspruch 5, <u>dadurch gekennzeichnet</u>, daß die Verzögerung an eine im Signalweg wirksame Verzögerung des Farbsignals angepaßt ist.

7. Schaltung nach Anspruch 2, <u>dadurch gekennzeichnet</u>, daß die Regelung in der PLL-Schaltung (11) zur Erzeugung der Ausleseimpulsfolge (f2L, f2C) mit einer Impulsspannung erfolgt, deren Frequenz der Periodendauer des Zeitfehlers des Videosignals entspricht.

8. Schaltung nach Anspruch 2 oder 7, <u>dadurch gekennzeichnet</u>, daß in der PLL-Schaltung (11) ein Frequenzvergleich mit Hilfe digitaler Zählschaltungen (20) erfolgt und die Regelspannung (UR) durch Digital/Analog-Wandlung einer aus dem Zählergebnis abgeleiteten Binärzahl gewonnen wird (Fig. 3).

0149087

**Zahlenbeispiel:**

$$f_H = 15{,}625 \text{ kHz}$$

$$\text{Bitrate} = f_T = 52 \cdot f_H \qquad (1 \text{ PCM-Block}$$

$$f_{1L} = 20 \cdot f_T \qquad = 2\text{H-Perioden}$$
$$= 104 \text{ bit} \qquad )$$

$$f_{1C} = 8 \cdot f_T$$

$$f_{2L} = f_{2C} = 24 \cdot f_T$$

**Fig 1**

H 83 / 91 – 1

0149087

**Fig. 2**

$f_2 = 1248 \cdot f_H$

**Fig. 3**

$f_{H1}$

$f_B = 25\,Hz$

V/R

$f_{Hz}$

Q

V/R−Zähler: je $f_B$−Periode $\quad 625 \cdot 78 = 48750$
$$= 110 + 190 \cdot 256$$

0149087

**Fig.4**

Q 11
Q 12
Q 13

Schaltspg. Einlesen

$f_{H1}$

$\overline{Q}\,11$ Verriegelung

**Fig.5**

$\overline{R}$

$f_{H2}$

Q 23
Q 22
Q 23

Schaltspg. Auslesen

$f_{H1}$

Q 11

Q 12

Q 13

$f_{H2}$

Q 21

Q 22

Q 23

H 83/91−3